# EUROPEAN PATENT SPECIFICATION

(11) **EP 2 713 255 B1**
(45) Date of publication and mention of the grant of the patent: **27.09.2017**
(21) Application number: 13792237.3
(22) Date of filing: 06.01.2013
(51) Int. Cl.: G06F 3/0482, G06F 17/27, G06F 3/0489, G06F 3/01, G06F 3/023

(54) **METHOD AND ELECTRONIC DEVICE FOR PROMPTING CHARACTER INPUT**
VERFAHREN UND ELEKTRONISCHE VORRICHTUNG ZUR AUFFORDERUNG FÜR ZEICHENEINGABE
PROCÉDÉ ET DISPOSITIF ÉLECTRONIQUE DESTINÉS À INVITER À LA SAISIE DE CARACTÈRES

(30) Priority: 04.06.2012 CN 201210181317
(43) Date of publication of application: 02.04.2014
(60) Divisional application: 17152319.4
(73) Proprietor: Huawei Device Co., Ltd., Shenzhen, Guangdong 518129 (CN)
(72) Inventor: WEI, Konggang, Shenzhen Guangdong 518129 (CN); ZHONG, Guanghua, Shenzhen Guangdong 518129 (CN)
(74) Representative: Kreuz, Georg Maria
(86) International application number: PCT/CN2013/070090
(87) International publication number: WO 2013/181935

(56) References cited:
- EP-A1- 2 345 971
- CN-A- 101 196 792
- CN-A- 101 246 396
- CN-A- 101 727 271
- CN-A- 102 750 088
- US-A1- 2005 060 138
- LEI ZHANG: "Automatic detecting/correcting errors in Chinese text by an approximate word-matching algorithm", ACL '00 PROCEEDINGS OF THE 38TH ANNUAL MEETING ON ASSOCIATION FOR COMPUTATIONAL LINGUISTICS, 1 January 2000 (2000-01-01), pages 248-254, XP55164262,
- Lei Zhang ET AL: "Multifeature-based approach to automatic error detection and correction of Chinese text", Proceedings of the First Workshop on Natural Language Processing and Neural Networks, 1 January 1999 (1999-01-01), XP55162815, Retrieved from the Internet: URL:http://research.microsoft.com/pubs/688 41/proceedings_natural_language_processing .pdf [retrieved on 2015-01-16]
- ANONYMOUS: 'NeuroGrammar(TM) - This Grammar Checker Works!', [Online] 05 May 2012, XP055284498 Retrieved from the Internet: <URL:https://web.archive.org/web/2012050509 4724/http://www.tranexp.com/win/NeuroGramma r.htm> [retrieved on 2016-06-29]

## Description

### TECHNICAL FIELD

The present invention relates to the field of computers, and in particular, to a character input prompting method and electronic device.

### BACKGROUND

At present, most input methods support word input, and also support sentence input. However, when editing a document, a user often needs to make a modification at a certain position in the middle of a sentence. In current input methods, the user has to move a cursor to a modification position and then in the same way as sequential input, inputs a code through a method such as Pinyin or Wubi; and only in this way, a character that needs to be added or modified can be inserted into the sentence. Such a process may require the user to use a mouse and a keyboard in combination to achieve a purpose of modification. The process is complex, thereby reducing a text editing processing speed of an electronic device.

Document EP2345971 A1 discloses an improved mobile electronic device and method enable the outputting of proposed spelling corrections that are based upon a location of a cursor at or adjacent a character of a text entry. The proposed spelling corrections that are output in a window on a display can be fewer in number and thus more readily reviewable since some valid spelling corrections may be suppressed from such a window if they do not additionally include a character difference from the potentially misspelled text entry that is relevant to the location of the cursor.

Document "Automatic detecting/correcting errors in Chinese text by an approximate word-matching algorithm", ACL '00 PROCEEDINGS OF THE 38TH ANNUAL MEETING ON ASSOCIATION FOR COMPUTATIONAL LINGUISTICS, pages 248-254, discloses a method for automatic detecting/correcting errors in Chinese text by an approximate word-matching algorithm. Especially, it discloses that the way to implement the approximate Chinese word match is: for each substring with length 1, 2, 3..., N, starting at specified position in sentence, browse the dictionary and count their similarity or edit distance to every word in it.

Document US 2005/060138 A1 discloses a language input architecture receiving input text entered by a user from an input device. The input text is converted to an output text. The language input architecture has a user interface that displays the output text and unconverted input text in line with one another. As the input text is converted, it is replaced in the UI with the converted output text. In addition to this in-line input feature, the UI enables in-place editing or error correction without requiring the user to switch modes from an entry mode to an edit mode.

Document "NeuroGrammar™ - This Grammar Checker Works!", https:// web.archive.org/web/20120505094724/http://www.tranexp.com/win/NeuroGrammar.htm, introduces a online service for checking grammar of English documents by using advanced neural-network artificial intelligence algorithms to analyze every noun phrase and verb phrase in every sentence for syntactic and semantic errors.

### SUMMARY

Embodiments of the present invention provide a character input prompting method and electronic device, so that a modification or insertion process can be simpler, thereby improving a text editing processing speed of an electronic device.

Embodiments of the present invention adopt the following technical solutions:
In one aspect, an embodiment of the present invention provides a Chinese character or characters input prompting method, where the method includes:
   obtaining a position of a cursor;
   obtaining a first Chinese character or characters before the position of the cursor and adjacent to the cursor and a second Chinese character or characters after the position of the cursor and adjacent to the cursor, where the first Chinese character or characters is a single character or a character string including multiple characters, and the second Chinese character or characters is a single character or a character string including multiple characters;
   obtaining, from an input method database, a character or characters that can form a word or a sentence with the first Chinese character or characters and the second Chinese character or characters; and
   prompting, in the form of a candidate character list, a user for the character or characters that can form a word or a sentence with the first Chinese character or characters and the second Chinese character or characters.
In another aspect, an embodiment of the present invention provides an electronic device, where the electronic device includes:
   a detecting unit, configured to obtain a position of a cursor;
   an obtaining unit, configured to obtain a first Chinese character or characters before the position of the cursor and adjacent to the cursor and a second Chinese character or characters after the position of the cursor and adjacent to the cursor, wherein the first Chinese character or characters is a single Chinese character or a Chinese character string comprising multiple Chinese characters, and the second Chinese character or characters is a single Chinese character or a Chinese character string comprising multiple Chinese characters;
   a matching unit, configured to obtain, from an input method database, a Chinese character or characters that can form a word or a sentence with at least one of: the first Chinese character or characters and the second Chinese character or characters; and
   a prompting unit, configured to prompt, in the form of a candidate Chinese character list, a user for the Chinese character that can form a word or a sentence with at least one of: the first Chinese character or characters and the second Chinese character or characters.

The embodiments of the present invention provide a character or characters input prompting method. A position of a cursor can be detected, and character or characters before and after the cursor are obtained; and then an input method database is searched for a character or characters that can form a word or a sentence with the character or characters before and after the cursor and a user is prompted, in the form of a list, for the character or characters that can form a word or a sentence with the character or characters before and after the cursor, so that the user can perform selection, and a modification or insertion process is simpler, thereby improving a text editing processing speed of an electronic device.

### BRIEF DESCRIPTION OF DRAWINGS

To describe the technical solutions in the embodiments of the present invention more clearly, the accompanying drawings required for describing the embodiments or are introduced briefly in the following. Apparently, the accompanying drawings in the following description show only some embodiments of the present invention, and persons of ordinary skill in the art may also obtain other drawings according to these accompanying drawings without creative efforts.
FIG. 1 is a schematic flow chart of a character input prompting method according to Embodiment 1 of the present invention;
FIG. 2 is a schematic flow chart of a character input prompting method according to Embodiment 2 of the present invention;
FIG. 3 is a schematic diagram of the character input prompting method according to Embodiment 2 of the present invention;
FIG. 4 is a second schematic diagram of the character input prompting method according to Embodiment 2 of the present invention;
FIG. 5 is a third schematic diagram of the character input prompting method according to Embodiment 2 of the present invention;
FIG. 6 is a schematic structural diagram of an electronic device according to Embodiment 3 of the present invention;
FIG. 7 is a schematic structural diagram of another electronic device according to Embodiment 3 of the present invention; and
FIG. 8 is a schematic structural diagram of still another electronic device according to Embodiment 3 of the present invention.

### DETAILED DESCRIPTION OF EMBODIMENTS

The technical solutions in the embodiments of the present invention are clearly and completely described in the following with reference to the accompanying drawings in the embodiments of the present invention. Apparently, the embodiments to be described are only a part rather than all of the embodiments of the present invention. All other embodiments obtained by persons of ordinary skill in the art based on the embodiments of the present invention without creative efforts shall fall within the protection scope of the present invention.

The terms used in the embodiments of the present invention are only used to describe specific embodiments, but are not intended to limit the present invention. Unless otherwise specified clearly in the context, the words "one", "the", and "said" in a singular form used in the embodiments of the present invention and the appended claims also imply a plural form semantically. It should also be noted that, the term "and/or" used in this application refers to and includes any one or all possible combinations of the listed one or more associated items.

### Embodiment 1

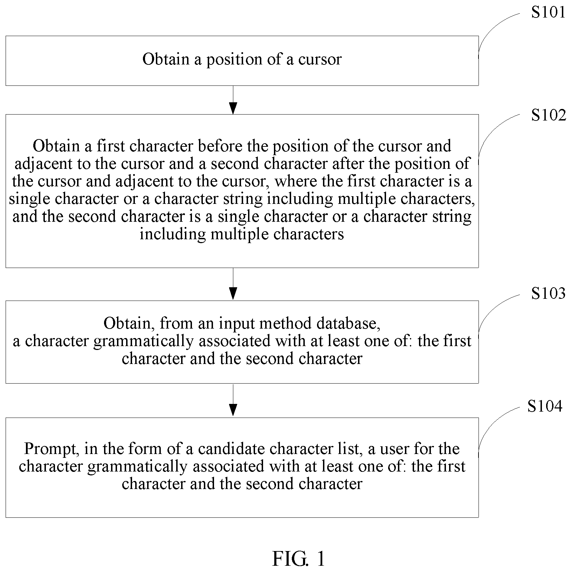

Embodiment 1 of the present invention provides a character(s) input prompting method. As shown in FIG. 1, the method specifically includes:
S101: Obtain a position of a cursor.
S102: Obtain a first character(s) before the position of the cursor and adjacent to the cursor and a second character(s) after the position of the cursor and adjacent to the cursor, where the first character(s) is a single character or a character string including multiple characters, and the second character(s) is a single character or a character string including multiple characters.
S103: Obtain, from an input method database, a character(s) grammatically associated with at least one of: the first character(s) and the second character(s).
S104: Prompt, in the form of a candidate character list, a user for the character(s) grammatically associated with at least one of: the first character(s) and the second character(s).

The embodiment of the present invention provides a character(s) input prompting method. A position of a cursor can be detected, and character(s) before and after the cursor are obtained; and then an input method database is searched for a character(s) grammatically associated with the character(s) before and after the cursor and a user is prompted, in the form of a list, for the character(s) grammatically associated with the character(s) before and after the cursor, so that the user can perform selection, and a modification or insertion process is simpler, thereby improving a text editing processing speed of an electronic device.

### Embodiment 2

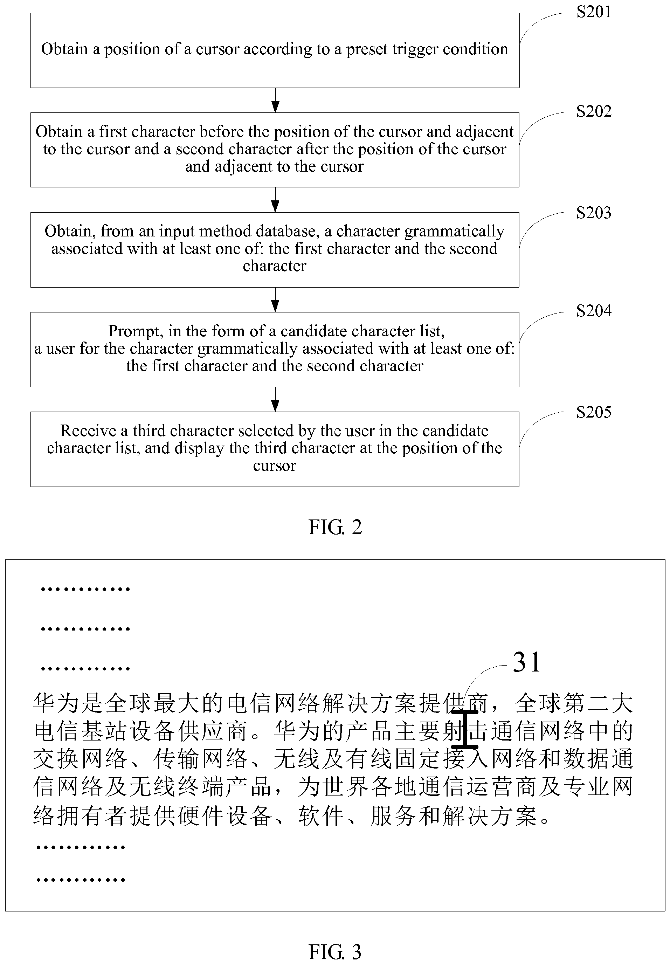

Embodiment 2 of the present invention provides a character(s) input prompting method. As shown in FIG. 2, the method includes:
S201: Obtain a position of a cursor according to a preset trigger condition.

Exemplarily, first of all, when an electronic device detects that a cursor stops moving, the electronic device detects retention duration of the cursor; and when it is detected that the retention duration of the cursor reaches preset duration, the electronic device determines that the current position of the cursor requires modification or insertion, and obtains the current position of the cursor.

Alternatively, according to a cursor position obtaining instruction received from a user, the position of the cursor may be obtained by executing the cursor position obtaining instruction. In this case, the user may use a shortcut key on a keyboard to generate the cursor position obtaining instruction, and may also long press a left mouse button or a right mouse button to generate the cursor position obtaining instruction. The electronic device obtains the current position of the cursor after receiving the cursor position obtaining instruction.

Definitely, two trigger manners may also be combined. After the cursor stops moving, the electronic device starts detecting retention duration of the cursor. If the retention duration of the cursor does not reach the preset duration, the current position of the cursor is immediately obtained upon receiving a cursor position obtaining instruction from the user; and if no cursor position obtaining instruction is received from the user, the current position of the cursor is obtained when the retention duration of the cursor reaches the preset duration.

Further, in addition to the foregoing trigger manners, a microphone may also be used to trigger, through sound, the obtaining of the position of the cursor; or a camera of the electronic device may be used to trigger, through a special gesture, the obtaining of the position of the cursor.

Exemplarily, a coordinate of the current position of the cursor may be obtained by using a GetCaretPos function, and a coordinate of the current position of the cursor may also be obtained by using a GetGUIThreadInfo function. In consideration of the universality of a system and software, the latter is recommended.

S202: Obtain a first character(s) before the position of the cursor and adjacent to the cursor and a second character(s) after the position of the cursor and adjacent to the cursor.

Exemplarily, after the position of the cursor is obtained through detection, the first character(s) is obtained by performing character obtaining backwards from the position of the cursor to a text control character; and the second character(s) is obtained by performing character obtaining forwards from the position of the cursor to a text control character(s).

The text control character includes: a punctuation mark, a carriage return, and a line break. For example, if the cursor is located in the middle of a paragraph, the first character(s) is obtained by performing character obtaining backwards from the position of the cursor to a punctuation mark; and the second character(s) is obtained by performing character obtaining forwards from the position of the cursor to a punctuation mark. If the cursor is located at the beginning of a paragraph, character(s) obtaining is performed backwards from the position of the cursor to a carriage return, and in this case, the first character(s) is null. If a sentence where the cursor is located is not finished and no punctuation mark follows the position of the cursor, the second character(s) is obtained by performing character(s) obtaining forwards from the position of the cursor to a carriage return.

For example, in an operating system of the electronic device, an API (Application Programming Interface, application programming interface) function and a TextOut (output) function need to be invoked for output and display of all text. Therefore, character(s) before and after the position of the cursor may be obtained by adopting a manner of establishing a hook (Hook) with the API function.

First, an address of the TextOut function is found by searching a memory space of the system; and then, parameters of the TextOut function are transferred to a target function, and the cursor of the electronic device jumps to the target function. The target function is used for word selection of the cursor, and the parameters of the TextOut function include: HDC hdc, int nXStart, int nYStart, LPCTSTR lpString, and int cbString.

The system may run multiple windows for editing text at the same time, and therefore, after the cursor of the electronic device jumps to the target function, the target function first determines whether a window that requires character obtaining is a current window; if yes, character obtaining is performed; and otherwise, no processing is performed.

Exemplarily, after the cursor of the electronic device jumps to the target function, the electronic device determines, by using the target function, whether the HDC hdc is a window handle of the current position of the cursor. The electronic device may open multiple windows at the same time, and therefore, it is determined whether the HDC hdc is a window handle of the current position of the cursor, so as to identify whether the cursor is located in a current operating window. If the HDC hdc is not a window handle of the current position of the cursor, no processing is performed; and if the HDC hdc is a window handle of the current position of the cursor, the target function copies the parameters of the TextOut function, where the int nXStart and int nYStart represent coordinates of an output character(s) of the TextOut function, and the LPCTSTR lpString represents content of the output character(s). After the copy is completed, the cursor returns from the target function to the TextOut function, and the TextOut function is continued to be executed, so that an output character(s) of the current window can be displayed normally.

Afterward, according to the coordinates of the output character(s), namely, the int nXStart and int nYStart, and the content of the output character(s), namely, the LPCTSTR lpString, and in combination with the current position of the cursor, character obtaining is performed backwards from the position of the cursor to a punctuation mark and character obtaining is also performed forwards from the position of the cursor to a punctuation mark by using the target function. In this way, the first character(s) before the position of the cursor and the second character(s) after the position of the cursor are both obtained.

Further, to avoid that an obtained character is too long, a preset character length may be set in the electronic device to serve as an upper limit for the length of the obtained character.

In this way, character obtaining is performed backwards from the position of the cursor, and if no text control character is obtained but the length of an obtained character(s) reaches the preset character length, the obtaining is stopped to obtain the first character(s).

In the same way, character obtaining is performed forwards from the position of the cursor, and if no text control character is obtained but the length of an obtained character(s) reaches the preset character length, the obtaining is stopped to obtain the second character(s).

The first character(s) may be a single character or a character string including multiple characters; and the second character(s) may be a single character or a character string including multiple characters. In other words, the first character(s) may be a character(s), may also be a word, and may also be a sentence; and in the same way, the second character(s) may be a character(s), may also be a word, and may also be a sentence.

S203: Obtain, from an input method database, a character(s) grammatically associated with at least one of: the first character(s) and the second character(s).

First, starting from a character, which is closest to the position of the cursor, of the obtained first character(s), characters are added backwards one by one, and fuzzy matching is performed between the characters that are added backwards one by one and characters in the input method database, where the input method database includes a character library, a word library, and a sentence library, until matching for all of the first character(s) is finished, so as to find a character that can form a word with the first character(s) or a character that can form a sentence with the first character(s), where the character(s) may be a single character or a character string including multiple characters, that is, the character(s) may be a character, a word, or a sentence.

Exemplarily, in the first character(s), fuzzy matching is performed between a character in first place before the position of the cursor and a character, a word, and a sentence in the input method database, so as to find a character that can form a word with the character in first place or a character that can form a sentence with the character in first place. After matching for the character in first place is finished, a character is added backwards and fuzzy matching is performed between the character and a character, a word, and a sentence in the input method database, that is, fuzzy matching is performed between a character string formed by the character in first place and a character in second place before the position of the cursor and a character, a word, and a sentence in the input method database, so as to find a character that can form a word with the character string or a character that can form a sentence with the character string. The rest is done in the same manner until matching for all of the first character(s) is finished.

In the second character(s), starting from a character, which is closest to the position of the cursor, of the second character(s), characters are added forwards one by one, and fuzzy matching is performed between the characters that are added forwards one by one and characters in the input method database, where the input method database includes a character library, a word library, and a sentence library, until matching for all of the second character(s) is finished, so as to find a character that can form a word with the second character(s) or a character(s) that can form a sentence with the second character(s), where the character(s) may be a single character or a character string including multiple characters, that is, the character(s) may be a character(s), a word, or a sentence. A specific process is exactly the same as that of the first character(s), and is not described in detail herein again.

It should be noted that during the fuzzy matching, matching may be performed with the first character(s), may also be performed with the second character(s), and may also be performed with the first character(s) and the second character(s) at the same time. Definitely, when the matching is performed with the first character(s) and the second character(s) at the same time, an obtained grammatically associated character(s) is a character(s) that has grammatical association with both the first character(s) and the second character(s), namely, a character(s) that can form a word or a sentence with both the first character(s) and the second character(s), where the character(s) may be a single character, and may also be a character string including multiple characters. A specific matching manner may be set according to an actual requirement, which is not limited in this embodiment.

S204: Prompt, in the form of a candidate character list, a user for the character(s) grammatically associated with at least one of: the first character(s) and the second character(s).

The user is prompted for the found character(s) that can form a word or a sentence with the first character(s), the found character(s) that can form a word or a sentence with the second character(s), or the found character(s) that can form a word or a sentence with the first character(s) and the second character(s), and the found character(s) may be displayed, for example, in the form of a list.

In another embodiment of the present invention, character(s)s may be displayed in a candidate character list in descending order of a matching degree. The matching degree may be set according to the grammar; a character(s), word, or sentence that can form a grammatically optimal combination with the first character(s) or the second character(s) is displayed on the top of the list for the user to select.

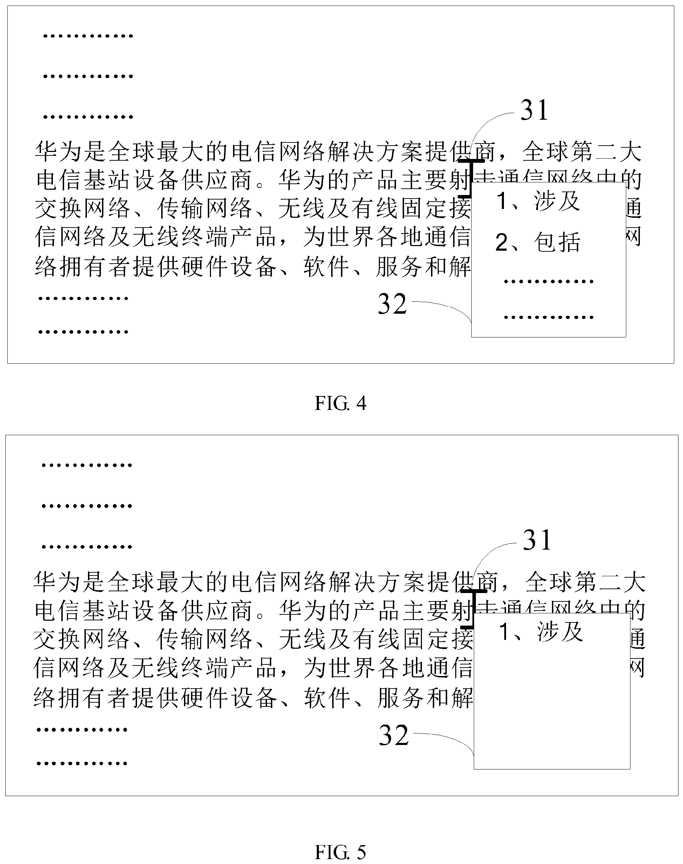

Exemplarily, in a paragraph shown in FIG. 3, the numeral 31 represents a cursor, and the cursor is located at the word " 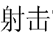 ". When an electronic device detects that retention duration of the cursor 31 at this position reaches preset duration, or receives a cursor position obtaining instruction, the electronic device obtains a current position of the cursor 31. Then, a first character(s) is obtained by obtaining character(s) backwards from the position of the cursor to a punctuation mark; and a second character(s) is obtained by obtaining character(s) forwards from the position of the cursor to a punctuation mark. It can be known from FIG. 3 that, the first character(s) is " 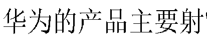 ", and the second character(s) is " 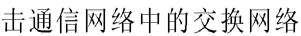 ". Afterwards, the electronic device performs fuzzy matching between the first character(s) and an input method database. To be more accurate, optionally, the electronic device may also perform fuzzy matching between the second character(s) and the input method database. Character(s)s obtained after the matching are displayed in a candidate character list in descending order of a matching degree, so that the user can perform selection to replace an error at the position of the cursor. For example, as shown in FIG. 4, " 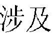 " may be displayed on the top of the list 32, and the next may be " 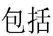 ".

S205: Receive a third character(s) selected by the user in the candidate character list, and display the third character(s) at the position of the cursor, where the third character(s) may be a single character or a character string including multiple characters, that is, the third character(s) may be a character, may be a word, and may also be a sentence.

As shown in FIG. 4, in the character list 32, an optimal option is a first option, namely, " 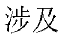 ". When the third character(s) that is received by the electronic device and selected by the user is the first option, the electronic device displays " 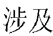 " at the position of the cursor 31, that is, between " 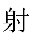 " and " 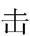 ", and then the user may manually delete the two characters " 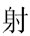 " and " 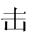 ".

Alternatively, further, when the candidate character list has only one candidate third character(s), the electronic device automatically displays the third character(s) at the position of the cursor, where the third character(s) herein may be a single character or a character string including multiple characters, that is, the third character(s) may be a character, may be a word, and may also be a sentence; and moreover, the third character(s) herein may be the same as and may also be different from the foregoing third character(s) selected by the user in the candidate character list.

As shown in FIG. 5, the candidate character list 32 has only one option: " 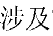 ". In this case, the electronic device may automatically display " 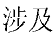 " at the position of the cursor 31, that is, between " 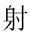 " and " 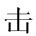 ", and in this way, automatic insertion is completed. Then, the user may manually delete the two characters " 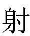 " and " 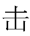 ", that is, manual replacement is completed.

When the candidate character list has multiple options, the third character(s) that serves as the first option is displayed at the position of the cursor. The third character(s) herein may be a single character or a character string including multiple characters, that is, the third character(s) may be a character, may be a word, and may also be a sentence; and moreover, the third character(s) herein may be the same as and may also be different from the foregoing third character(s) selected by the user in the candidate character list and the third character(s) that is the only one candidate.

As shown in FIG. 4, the candidate character list 32 includes multiple options, for example, the first option is " 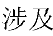 ", and a second option is " 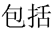 ", where the first option " 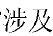 " is an optimal option. In this case, the electronic device may automatically display the first option " 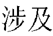 " at the position of the cursor 31, that is, between " 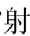 " and " 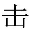 ", and in this way, automatic insertion is completed. Afterward, the user may manually delete the two characters " 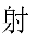 " and " 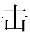 ", that is, manual replacement is completed.

Further, before displaying " 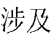 ", the electronic device may first determine whether a fourth character(s) formed by character(s) before and after the position of the cursor has the same attribute as that of the third character(s). In a general case, the fourth character(s) may have the same length as that of the third character(s), and the same attribute may refer to the same pronunciation or the same meaning.

When the fourth character(s) has the same attribute as that of the third character(s), the fourth character(s) is deleted, so that the fourth character(s) is deleted and replaced with the third character(s). The fourth character(s) may be deleted by invoking a Delete function.

For example, in a paragraph shown in FIG. 4, the Delete function is invoked to delete " 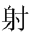 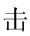 " at the position of the cursor 31, and then, after the deletion, " 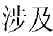 " is displayed at the position of the cursor 31, and in this way, automatic replacement of an error word in a document is completed.

Definitely, except that there is no character deletion step, other steps of a method for inserting a character at a position where a character is missing are the same as those of the foregoing method, and are not described herein again.

The embodiment of the present invention provides a character(s) input prompting method. A position of a cursor can be detected, and character(s) before and after the cursor are obtained; and then an input method database is searched for a character(s) grammatically associated with the character(s) before and after the cursor and a user is prompted, in the form of a list, for the character grammatically associated with the character(s) before and after the cursor, so that the user can perform selection, and a modification or insertion process is simpler, thereby improving a text editing processing speed of an electronic device.

### Embodiment 3

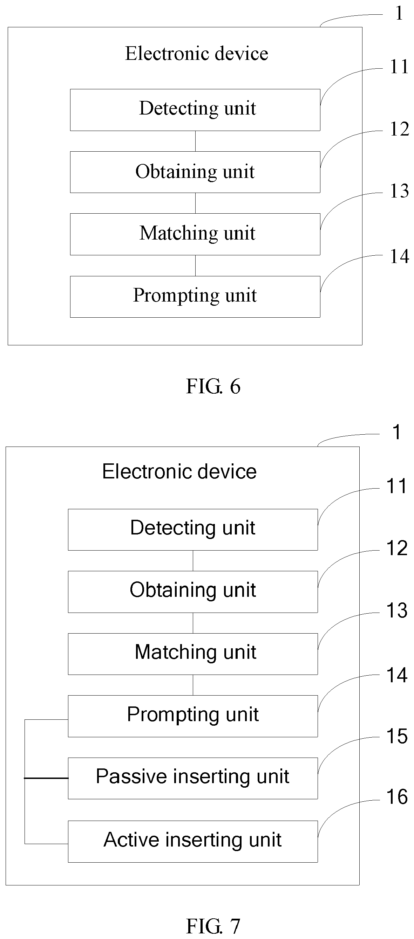

Another embodiment of the present invention provides an electronic device 1, and as shown in FIG. 6, the electronic device includes:
a detecting unit 11, configured to obtain a position of a cursor;
an obtaining unit 12, configured to obtain a first character(s) before the position of the cursor and adjacent to the cursor and a second character(s) after the position of the cursor and adjacent to the cursor, where the first character(s) is a single character or a character string including multiple characters, and the second character(s) is a single character or a character string including multiple characters;
a matching unit 13, configured to obtain, from an input method database, a character(s) grammatically associated with at least one of: the first character(s) and the second character(s); and
a prompting unit 14, configured to prompt, in the form of a candidate character list, a user for the character(s) grammatically associated with at least one of: the first character(s) and the second character(s).

The obtaining unit 12 may be specifically configured to:
perform character obtaining backwards from the position of the cursor to a text control character to obtain the first character(s); and
perform character obtaining forwards from the position of the cursor to a text control character to obtain the second character(s), where
the text control character includes: a punctuation mark, a carriage return, and a line break.

Alternatively, the obtaining unit 12 may be specifically configured to:
perform character obtaining backwards from the position of the cursor, and if no text control character is obtained but the length of an obtained character reaches a preset character length, stop the obtaining to obtain the first character(s); and
perform character obtaining forwards from the position of the cursor, and if no text control character is obtained but the length of an obtained character(s) reaches the preset character length, stop the obtaining to obtain the second character(s), where
the preset character length is a preset upper limit for the length of the obtained character(s).

Further, as shown in FIG. 7, the electronic device 1 may further include:
a passive inserting unit 15, configured to receive a third character(s) selected by the user in the candidate character list, and display the third character(s) at the position of the cursor, where the third character(s) is a single character or a character string including multiple characters; and
an active inserting unit 16, configured to, when the candidate character list has only one candidate third character(s), display the third character(s) at the position of the cursor, where the third character(s) is a single character or a character string including multiple characters.

The active inserting unit 16 is further configured to:
when the candidate character list has multiple candidate characters, display a third character(s) that serves as a first option at the position of the cursor, where the third character(s) is a single character or a character string including multiple characters.

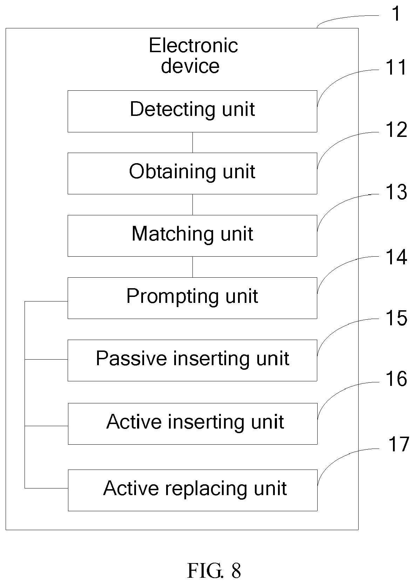

Further, as shown in FIG. 8, the electronic device 1 may further include:
an active replacing unit 17, configured to, when a fourth character(s) formed by character(s) before and after the position of the cursor has the same attribute as that of the third character(s), delete the fourth character(s), so as to delete and replace the fourth character(s) with the third character(s), where
in a general case, the fourth character(s) has the same length as that of the third character(s), and the same attribute includes the same pronunciation or the same meaning.

Further, the detecting unit 11 may be specifically configured to:
after the cursor stops moving, detect retention duration of the cursor; and when the retention duration of the cursor reaches preset duration, obtain the position of the cursor; or
receive a cursor position obtaining instruction from the user, and execute the cursor position obtaining instruction to obtain the position of the cursor.

The matching unit 13 may be specifically configured to:
match the first character(s) and the second character(s) with a character in the input method database, and search for a character(s) grammatically associated with the first character(s) and the second character(s); or
match the first character(s) or the second character(s) with a character in the input method database, and search for a character(s) grammatically associated with the first character(s) or the second character(s), where
the prompting, in the form of a candidate character list, a user for the character(s) grammatically associated with at least one of: the first character(s) and the second character(s) specifically includes prompting, in the form of a candidate character list, the user for any combination of the following three types of characters: a single character that forms a word or a sentence with the first character(s) and the second character(s), or a character string that includes multiple characters and forms a word or a sentence with the first character(s) and the second character(s); a single character that forms a word or a sentence with the first character(s), or a character string that includes multiple characters and forms a word or a sentence with the first character(s); and a single character that forms a word or a sentence with the second character(s), or a character(s) string that includes multiple character(s)s and forms a word or a sentence with the second character(s).

The prompting unit 14 may be specifically configured to:
sequence characters in the candidate character(s) list one by one according to a matching degree with the first character(s) and/or the second character(s), and prompt the user for the sequenced characters.

The electronic device provided in the embodiment of the present invention can detect a position of a cursor and obtain character(s) before and after the cursor, then searches an input method database for a character(s) grammatically associated with the character(s) before and after the cursor, and prompts, in the form of a list, a user of the character(s), so that the user can perform selection, and a modification or insertion process is simpler, thereby improving a text editing processing speed of an electronic device.

The electronic device 1 provided in the embodiment of the present invention is applicable to electronic devices having an input function, for example, a personal computer, a tablet computer, and a smart phone, and can execute actions in the foregoing method embodiments.

In addition, various functional units of the electronic device 1 according to each embodiment of the present invention may be integrated into one processing unit or may exist as various separate physical units, or two or more units may also be integrated into one unit. The integrated unit may be implemented in the form of hardware or in the form of a software functional unit.

The integrated unit implemented in the form of a software functional unit may be stored in a computer readable storage medium. The software functional unit is stored in a storage medium, which includes several instructions used for enabling an electronic device (which may be a personal computer, a server, or a network device) to execute part of steps of the methods in the embodiments of the present invention. The storage medium includes various media capable of storing program codes, such as a USB flash disk, a mobile hard disk, a read only memory (Read Only Memory, referred to as ROM), a random access memory (Random Access Memory, referred to as RAM), a magnetic disk, or an optical disk.

The foregoing descriptions are only specific embodiments of the present invention, but are not intended to limit the protection scope of the present invention. Any variation or replacement that can be easily figured out by persons skilled in the art within the technical scope disclosed in the present invention shall all fall within the protection scope of the present invention. Therefore, the protection scope of the present invention shall be subject to that of the claims.

## Claims

1. A Chinese character or characters input prompting method, comprising:
obtaining a position of a cursor (S101);
obtaining a first Chinese character or characters before the position of the cursor and adjacent to the cursor and a second Chinese character or characters after the position of the cursor and adjacent to the cursor, wherein the first Chinese character or characters is a single Chinese character or a character string comprising multiple Chinese characters, and the second character or characters is a single character or a character string comprising multiple characters (S102);
obtaining, from an input method database, a Chinese character or characters that can form a word or a sentence with the first Chinese character or characters and the second Chinese character or characters (S103); and
prompting, in the form of a candidate character list, a user for the Chinese character or characters that can form a word or a sentence with the first Chinese character or characters and the second Chinese character or characters (S104).

2. The Chinese character or characters input prompting method according to claim 1, wherein the obtaining the first Chinese character or characters before the position of the cursor and adjacent to the cursor and the second Chinese character or characters after the position of the cursor and adjacent to the cursor comprises:
performing character or characters obtaining backwards from the position of the cursor to a text control character to obtain the first Chinese character or characters; and
performing character or characters obtaining forwards from the position of the cursor to a text control character to obtain the second Chinese character or characters, wherein
the text control character comprises: a punctuation mark, a carriage return, and a line break.

3. The Chinese character or characters input prompting method according to claim 1, wherein the obtaining the first Chinese character or characters before the position of the cursor and adjacent to the cursor and the second Chinese character or characters after the position of the cursor and adjacent to the cursor comprises:
performing character or characters obtaining backwards from the position of the cursor, and if no text control character is obtained but the length of an obtained Chinese character or characters reaches a preset character length, stopping the obtaining to obtain the first Chinese character or characters; and
performing character or characters obtaining forwards from the position of the cursor, and if no text control character is obtained but the length of an obtained Chinese character or characters reaches the preset character length, stopping the obtaining to obtain the second Chinese character or characters, wherein
the preset character length is a preset upper limit for the length of the obtained Chinese character or characters.

4. The Chinese character or characters input prompting method according to any one of claims 1 to 3, further comprising:
receiving a third Chinese character or characters selected by the user in the candidate character list, and displaying the third Chinese character or characters at the position of the cursor, wherein the third Chinese character or characters is a single character or a character string comprising multiple characters.

5. The Chinese character or characters input prompting method according to any one of claims 1 to 3, further comprising:
when the candidate character list has only one candidate third Chinese character or characters, displaying the third Chinese character or characters at the position of the cursor, wherein the third Chinese character or characters is a single character or a character string comprising multiple characters.

6. The Chinese character or characters input prompting method according to any one of claims 1 to 3, further comprising:
when the candidate character list has multiple options, displaying a third Chinese character or characters that serves as a first option at the position of the cursor, wherein the third Chinese character or characters is a single character or a character string comprising multiple characters.

7. The Chinese character or characters input prompting method according to any one of claims 4 to 6, wherein before the displaying the third Chinese character or characters at the position of the cursor, the method further comprises:
when a fourth Chinese character or characters formed by character or characters before and after the position of the cursor has the same attribute as that of the third Chinese character or characters, deleting the fourth Chinese character or characters, so as to delete and replace the fourth Chinese character or characters with the third Chinese character or characters, wherein
the fourth Chinese character or characters has the same length as that of the third Chinese character or characters, and the same attribute comprises the same pronunciation or the same meaning.

8. The Chinese character or characters input prompting method according to any one of claims 1 to 7, wherein the obtaining the position of the cursor specifically comprises:
after the cursor stops moving, detecting retention duration of the cursor; and when the retention duration of the cursor reaches preset duration, obtaining the position of the cursor; or
receiving a cursor position obtaining instruction from the user, and executing the cursor position obtaining instruction to obtain the position of the cursor.

9. The Chinese character or characters input prompting method according to any one of claims 1 to 7, wherein,
the obtaining, from the input method database, the character or characters that can form a word or a sentence with the first Chinese character or characters and the second Chinese character or characters comprises:
matching the first Chinese character or characters and the second Chinese character or characters with character or characters in the input method database, and searching for character or characters that can form a word or a sentence with the first Chinese character or characters and the second Chinese character or characters;
wherein
the prompting, in the form of a candidate character list, a user for the character or characters that can form a word or a sentence with the first Chinese character or characters and the second Chinese character or characters specifically comprises: prompting, in the form of a candidate character list, the user for any combination of the following three types of character or characters: a single character that forms a word or a sentence with the first Chinese character or characters and the second Chinese character or characters, or a character string that comprises multiple characters and forms a word or a sentence with the first Chinese character or characters and the second Chinese character or characters; a single character that forms a word or a sentence with the first Chinese character or characters, or a character string that comprises multiple characters and forms a word or a sentence with the first Chinese character or characters; and a single character that forms a word or a sentence with the second Chinese character or characters, or a character string that comprises multiple characters and forms a word or a sentence with the second Chinese character or characters.

10. The Chinese character or characters input prompting method according to claim 9, wherein the prompting, in the form of a candidate character list, a user for the character or characters that can form a word or a sentence with the first Chinese character or characters and the second Chinese character or characters specifically comprises:
sequencing characters in the candidate character list one by one according to a matching degree with the first Chinese character or characters and/or the second Chinese character or characters, and prompting the user for the sequenced characters.

11. The Chinese character or characters input prompting method according to any one of claims 1 to 10, wherein the input method database comprises: a character library, a word library, and a sentence library.

12. An electronic device (1), comprising:
a detecting unit (11), configured to obtain a position of a cursor;
an obtaining unit (12), configured to obtain a first Chinese character or characters before the position of the cursor and adjacent to the cursor and a second Chinese character or characters after the position of the cursor and adjacent to the cursor, wherein the first Chinese character or characters is a single Chinese character or a Chinese character string comprising multiple Chinese characters, and the second Chinese character or characters is a single Chinese character or a Chinese character string comprising multiple Chinese characters;
a matching unit (13), configured to obtain, from an input method database, a Chinese character or characters that can form a word or a sentence with at least one of: the first Chinese character or characters and the second Chinese character or characters; and
a prompting unit (14), configured to prompt, in the form of a candidate Chinese character list, a user for the Chinese character that can form a word or a sentence with at least one of: the first Chinese character or characters and the second Chinese character or characters.

13. The electronic device according to claim 12, wherein the obtaining unit is specifically configured to:
perform character obtaining backwards from the position of the cursor to a text control Chinese character to obtain the first Chinese character or characters; and
perform character obtaining forwards from the position of the cursor to a text control Chinese character to obtain the second Chinese character or characters, wherein
the text control Chinese character comprises: a punctuation mark, a carriage return, and a line break.

14. The electronic device according to claim 12, wherein the obtaining unit is specifically configured to:
perform character obtaining backwards from the position of the cursor, and if no text control Chinese character is obtained but the length of an obtained Chinese character or characters reaches a preset character length, stop the obtaining to obtain the first Chinese character or characters; and
perform character obtaining forwards from the position of the cursor, and if no text control Chinese character is obtained but the length of an obtained Chinese character or characters reaches the preset character length, stop the obtaining to obtain the second Chinese character or characters, wherein
the preset character length is a preset upper limit for the length of the obtained Chinese character or characters.

15. The electronic device according to any one of claims 12 to 14, further comprising:
a passive inserting unit, configured to receive a third Chinese character or characters selected by the user in the candidate Chinese character list, and display the third Chinese character or characters at the position of the cursor, wherein the third Chinese character or characters is a single Chinese character or a Chinese character string comprising multiple Chinese characters.

16. The electronic device according to any one of claims 12 to 15, further comprising:
an active inserting unit, configured to, when the candidate Chinese character list has only one candidate third Chinese character or characters, display the third Chinese character or characters at the position of the cursor, wherein the third Chinese character or characters is a single Chinese character or a Chinese character string comprising multiple Chinese characters.

17. The electronic device according to claim 16, wherein the active inserting unit is further configured to:
when the candidate Chinese character list has multiple options, displaying a third Chinese character or characters that serves as a first option at the position of the cursor, wherein the third Chinese character or characters is a single Chinese character or a Chinese character string comprising multiple Chinese characters.

18. The electronic device according to any one of claims 12 to 17, further comprising:
an active replacing unit, configured to, when a fourth Chinese character or characters formed by Chinese character or characters before and after the position of the cursor has the same attribute as that of the third Chinese character or characters, delete the fourth Chinese character or characters, so as to delete and replace the fourth Chinese character or characters with the third Chinese character or characters, wherein
the fourth Chinese character or characters has the same length as that of the third Chinese character or characters, and the same attribute comprises the same pronunciation or the same meaning.

19. The electronic device according to any one of claims 12 to 18, wherein the detecting unit is specifically configured to:
after the cursor stops moving, detect retention duration of the cursor; and when the retention duration of the cursor reaches preset duration, obtain the position of the cursor; or
receive a cursor position obtaining instruction from the user, and execute the cursor position obtaining instruction to obtain the position of the cursor.

20. The electronic device according to any one of claims 12 to 18, wherein the matching unit is specifically configured to:
match the first Chinese character or characters and the second Chinese character or characters with a Chinese character in the input method database, and search for a Chinese character that can form a word or a sentence with the first Chinese character or characters and the second Chinese character or characters; or
match the first Chinese character or characters or the second Chinese character or characters with a Chinese character in the input method database, and search for a Chinese character that can form a word or a sentence with the first Chinese character or characters or the second Chinese character or characters, wherein
the prompting, in the form of a candidate Chinese character list, a user for the Chinese character that can form a word or a sentence with at least one of: the first Chinese character or characters and the second Chinese character or characters specifically comprises: prompting, in the form of a candidate Chinese character list, the user for any combination of the following three types of Chinese characters: a single Chinese character that forms a word or a sentence with the first Chinese character or characters and the second Chinese character or characters, or a Chinese character string that comprises multiple Chinese characters and forms a word or a sentence with the first Chinese character or characters and the second Chinese character or characters; a single Chinese character that forms a word or a sentence with the first Chinese character or characters, or a Chinese character string that comprises multiple Chinese characters and forms a word or a sentence with the first Chinese character or characters; and a single Chinese character that forms a word or a sentence with the second Chinese character or characters, or a Chinese character string that comprises multiple Chinese characters and forms a word or a sentence with the second Chinese character or characters.

21. The electronic device according to any one of claims 12 to 18, wherein the prompting unit is specifically configured to:
sequence Chinese characters in the candidate Chinese character list one by one according to a matching degree with the first Chinese character or characters and/or the second Chinese character or characters, and prompt the user for the sequenced Chinese characters.

## Patentansprüche

1. Eingabeabfrageverfahren für ein oder mehrere chinesische Schriftzeichen, das Folgendes umfasst:
Erhalten einer Position eines Cursors (S101);
Erhalten eines oder mehrerer erster chinesischer Schriftzeichen vor der Position des Cursors und angrenzend an den Cursor und eines oder mehrerer zweiter chinesischer Schriftzeichen nach der Position des Cursors und angrenzend an den Cursor, wobei das oder die mehreren ersten chinesischen Schriftzeichen ein einziges chinesisches Schriftzeichen oder eine Schriftzeichenkette, die mehrere chinesische Schriftzeichen umfasst, ist/sind, und wobei das oder die mehreren zweiten Schriftzeichen ein einziges Schriftzeichen oder eine Schriftzeichenkette, die mehrere Schriftzeichen (S102) umfasst, ist/sind;
Erhalten eines oder mehrerer chinesischer Schriftzeichen, das oder die ein Wort oder einen Satz mit dem oder den mehreren ersten chinesischen Schriftzeichen und dem oder den mehreren zweiten chinesischen Schriftzeichen (S103) bilden kann/können, aus einer Eingabeverfahrendatenbank; und
Befragen eines Benutzers nach dem oder den mehreren chinesischen Schriftzeichen, das oder die ein Wort oder einen Satz mit dem oder den mehreren ersten chinesischen Schriftzeichen und dem oder den mehreren zweiten chinesischen Schriftzeichen (S104) bilden kann/können, in Form einer Vorschlagsschriftzeichenliste.

2. Eingabeabfrageverfahren für ein oder mehrere chinesische Schriftzeichen nach Anspruch 1, wobei das Erhalten des oder der mehreren ersten chinesischen Schriftzeichen vor der Position des Cursors und angrenzend an den Cursor und des oder der mehreren zweiten chinesischen Schriftzeichen nach der Position des Cursors und angrenzend an den Cursor Folgendes umfasst:
Durchführen von Erhalten eines oder mehrerer Schriftzeichen von der Position des Cursors rückwärts zu einem Textsteuerschriftzeichen, um das oder die mehreren ersten chinesischen Schriftzeichen zu erhalten; und
Durchführen von Erhalten eines oder mehrerer Schriftzeichen von der Position des Cursors vorwärts zu einem Textsteuerschriftzeichen, um das oder die mehreren zweiten chinesischen Schriftzeichen zu erhalten, wobei
das Textsteuerschriftzeichen Folgendes umfasst: ein Satzzeichen, ein Wagenrücklauf und einen Zeilenumbruch.

3. Eingabeabfrageverfahren für ein oder mehrere chinesische Schriftzeichen nach Anspruch 1, wobei das Erhalten des oder der mehreren ersten chinesischen Schriftzeichen vor der Position des Cursors und angrenzend an den Cursor und des oder der mehreren zweiten chinesischen Schriftzeichen nach der Position des Cursors und angrenzend an den Cursor Folgendes umfasst:
Durchführen von Erhalten eines oder mehrerer Schriftzeichen von der Position des Cursors rückwärts und, falls kein Textsteuerschriftzeichen erhalten wird, aber die Länge eines oder mehrerer erhaltener chinesischer Schriftzeichen eine vorgegebene Schriftzeichenlänge erreicht, Anhalten des Erhaltens, um das oder die mehreren ersten chinesischen Schriftzeichen zu erhalten; und
Durchführen von Erhalten eines oder mehrerer Schriftzeichen von der Position des Cursors vorwärts und, falls kein Textsteuerschriftzeichen erhalten wird, aber die Länge eines oder mehrerer erhaltener chinesischer Schriftzeichen die vorgegebene Schriftzeichenlänge erreicht, Anhalten des Erhaltens, um das oder die mehreren zweiten chinesischen Schriftzeichen zu erhalten, wobei
die vorgegebene Schriftzeichenlänge eine vorgegebene Obergrenze für die Länge des oder der mehreren erhaltenen chinesischen Schriftzeichen ist.

4. Eingabeabfrageverfahren für ein oder mehrere chinesische Schriftzeichen nach einem der Ansprüche 1 bis 3, das ferner Folgendes umfasst:
Empfangen eines oder mehrerer dritter chinesischer Schriftzeichen, das oder die von dem Benutzer aus der Vorschlagsschriftzeichenliste ausgewählt ist/sind, und Anzeigen des oder der mehreren dritten chinesischen Schriftzeichen an der Position des Cursors, wobei das oder die mehreren dritten Schriftzeichen ein einziges Schriftzeichen oder eine Schriftzeichenkette, die mehrere Schriftzeichen umfasst, ist/sind.

5. Eingabeabfrageverfahren für ein oder mehrere chinesische Schriftzeichen nach einem der Ansprüche 1 bis 3, das ferner Folgendes umfasst:
Anzeigen des oder der mehreren dritten chinesischen Schriftzeichen an der Position des Cursors, wenn die Vorschlagsschriftzeichenliste nur einen Vorschlag aus einem oder mehreren dritten chinesischen Schriftzeichen aufweist, wobei das oder die mehreren dritten chinesischen Schriftzeichen ein einziges Schriftzeichen oder eine Schriftzeichenkette, die mehrere Schriftzeichen umfasst, ist/sind.

6. Eingabeabfrageverfahren für ein oder mehrere chinesische Schriftzeichen nach einem der Ansprüche 1 bis 3, das ferner Folgendes umfasst:
Anzeigen eines oder mehrerer dritter chinesischen Schriftzeichen an der Position des Cursors, das oder die als eine erste Möglichkeit dienen, wenn die Vorschlagsschriftzeichenliste mehrere Möglichkeiten aufweist, wobei das oder die mehreren dritten chinesischen Schriftzeichen ein einziges Schriftzeichen oder eine Schriftzeichenkette, die mehrere Schriftzeichen umfasst, ist/sind.

7. Eingabeabfrageverfahren für ein oder mehrere chinesische Schriftzeichen nach einem der Ansprüche 4 bis 6, wobei das Verfahren vor dem Anzeigen des oder der mehreren dritten chinesischen Schriftzeichen an der Position des Cursors ferner Folgendes umfasst:
Löschen des oder der mehreren vierten chinesischen Schriftzeichen, wenn ein oder mehrere vierte chinesische Schriftzeichen, das oder die von einem oder mehreren Schriftzeichen vor und nach der Position des Cursors gebildet ist/sind, das gleiche Attribut wie das oder die mehreren dritten chinesischen Schriftzeichen aufweist/aufweisen, so dass das oder die mehreren vierten chinesischen Schriftzeichen gelöscht und durch das oder die mehreren dritten chinesischen Schriftzeichen ersetzt werden, wobei
das oder die mehreren vierten chinesischen Schriftzeichen die gleiche Länge wie das oder die mehreren dritten chinesischen Schriftzeichen aufweist/aufweisen und das gleiche Attribut die gleiche Aussprache oder die gleiche Bedeutung umfasst.

8. Eingabeabfrageverfahren für ein oder mehrere chinesische Schriftzeichen nach einem der Ansprüche 1 bis 7, wobei das Erhalten der Position des Cursors speziell Folgendes umfasst:
Detektieren einer Verweildauer des Cursors, nachdem der Cursor aufhört, sich zu bewegen; und Erhalten der Position des Cursors, wenn die Verweildauer des Cursors eine vorgegebene Dauer erreicht; oder
Empfangen einer Cursorpositionserhalteanweisung von dem Benutzer und Ausführen der Cursorpositionserhalteanweisung, um die Position des Cursors zu erhalten.

9. Eingabeabfrageverfahren für ein oder mehrere chinesische Schriftzeichen nach einem der Ansprüche 1 bis 7, wobei
das Erhalten des oder der mehreren Schriftzeichen, das oder die ein Wort oder einen Satz mit dem oder den mehreren ersten chinesischen Schriftzeichen und dem oder den mehreren zweiten chinesischen Schriftzeichen bilden kann/können, aus der Eingabeverfahrensdatenbank Folgendes umfasst:
Abgleichen des oder der mehreren ersten chinesischen Schriftzeichen und des oder der mehreren zweiten chinesischen Schriftzeichen mit einem oder mehreren Schriftzeichen in der Eingabeverfahrensdatenbank und Suchen nach einem oder mehreren Schriftzeichen, das oder die ein Wort oder einen Satz mit dem oder den mehreren ersten chinesischen Schriftzeichen und dem oder den mehreren zweiten chinesischen Schriftzeichen bilden kann/können;
wobei
das Befragen eines Benutzers nach dem oder den mehreren Schriftzeichen, das oder die ein Wort oder einen Satz mit dem oder den mehreren ersten chinesischen Schriftzeichen und dem oder den mehreren zweiten chinesischen Schriftzeichen bilden kann/können, in Form einer Vorschlagsschriftzeichenliste speziell Folgendes umfasst: Befragen des Benutzers nach einer beliebigen Kombination der folgenden drei Arten eines oder mehrerer Schriftzeichen in Form einer Vorschlagsschriftzeichenliste: ein einziges Schriftzeichen, das ein Wort oder einen Satz mit dem oder den mehreren ersten chinesischen Schriftzeichen oder dem oder den mehreren zweiten chinesischen Schriftzeichen bildet, oder eine Schriftzeichenkette, die mehrere Schriftzeichen umfasst und ein Wort oder einen Satz mit dem oder den mehreren ersten chinesischen Schriftzeichen und dem oder den mehreren zweiten chinesischen Schriftzeichen bildet; ein einziges Schriftzeichen, das ein Wort oder einen Satz mit dem oder den mehreren ersten chinesischen Schriftzeichen bildet, oder eine Schriftzeichenkette, die mehrere Schriftzeichen umfasst und ein Wort oder einen Satz mit dem oder den mehreren ersten chinesischen Schriftzeichen bildet; und ein einziges Schriftzeichen, das ein Wort oder einen Satz mit dem oder den mehreren zweiten chinesischen Schriftzeichen bildet, oder eine Schriftzeichenkette, die mehrere Schriftzeichen umfasst und ein Wort oder einen Satz mit dem oder den mehreren zweiten chinesischen Schriftzeichen bildet.

10. Eingabeabfrageverfahren für ein oder mehrere chinesische Schriftzeichen nach Anspruch 9, wobei das Befragen eines Benutzers nach dem oder den mehreren Schriftzeichen, das oder die ein Wort oder einen Satz mit dem oder den mehreren ersten chinesischen Schriftzeichen und dem oder den mehreren zweiten chinesischen Schriftzeichen bilden kann/können, in Form einer Vorschlagsschriftzeichenliste speziell Folgendes umfasst:
Sequenzieren von Schriftzeichen in der Vorschlagsschriftzeichenliste der Reihe nach gemäß einem Abgleichungsgrad mit dem oder den mehreren ersten chinesischen Schriftzeichen und/oder dem oder den mehreren zweiten chinesischen Schriftzeichen und Befragen des Benutzers nach den sequenzierten Schriftzeichen.

11. Eingabeabfrageverfahren für ein oder mehrere chinesische Schriftzeichen nach einem der Ansprüche 1 bis 10, wobei die Eingabeverfahrensdatenbank Folgendes umfasst: eine Schriftzeichensammlung, eine Wortsammlung und eine Satzsammlung.

12. Elektronische Vorrichtung (1), die Folgendes umfasst:
eine Detektionseinheit (11), die zum Erhalten einer Position eines Cursors konfiguriert ist;
eine Erhalteeinheit (12), die zum Erhalten eines oder mehrerer erster chinesischer Schriftzeichen vor der Position des Cursors und angrenzend an den Cursor und eines oder mehrerer zweiter Schriftzeichen nach der Position des Cursors und angrenzend an den Cursor konfiguriert ist, wobei das oder die mehreren ersten chinesischen Schriftzeichen ein einziges chinesisches Schriftzeichen oder eine chinesische Schriftzeichenkette, die mehrere chinesische Schriftzeichen umfasst, ist/sind, und wobei das oder die mehreren zweiten chinesischen Schriftzeichen ein einziges chinesisches Schriftzeichen oder eine chinesische Schriftzeichenkette, die mehrere chinesische Schriftzeichen umfasst, ist/sind;
eine Abgleicheinheit (13), die zum Erhalten eines oder mehrerer chinesischer Schriftzeichen, das oder die ein Wort oder einen Satz mit dem oder den mehreren ersten chinesischen Schriftzeichen und/oder dem oder den mehreren zweiten chinesischen Schriftzeichen bilden kann/können, aus einer Eingabeverfahrensdatenbank konfiguriert ist; und
eine Befrageeinheit (14), die zum Befragen eines Benutzers nach dem oder den mehreren chinesischen Schriftzeichen, das oder die ein Wort oder einen Satz mit dem oder den mehreren ersten chinesischen Schriftzeichen und/oder dem oder den mehreren zweiten chinesischen Schriftzeichen bilden kann/können, in Form einer Vorschlagsliste für chinesische Schriftzeichen konfiguriert ist.

13. Elektronische Vorrichtung nach Anspruch 12, wobei die Erhalteeinheit speziell zu Folgendem konfiguriert ist:
Durchführen von Erhalten von Schriftzeichen von der Position des Cursors rückwärts zu einem chinesischen Textsteuerschriftzeichen, um das oder die mehreren ersten chinesischen Schriftzeichen zu erhalten; und
Durchführen von Erhalten von Schriftzeichen von der Position des Cursors vorwärts zu einem chinesischen Textsteuerschriftzeichen, um das oder die mehreren zweiten chinesischen Schriftzeichen zu erhalten, wobei
das chinesische Textsteuerschriftzeichen Folgendes umfasst: ein Satzzeichen, ein Wagenrücklauf und einen Zeilenumbruch.

14. Elektronische Vorrichtung nach Anspruch 12, wobei die Erhalteeinheit speziell zu Folgendem konfiguriert ist:
Durchführen von Erhalten von Schriftzeichen von der Position des Cursors rückwärts und, falls kein chinesisches Textsteuerzeichen erhalten wird, aber die Länge eines oder mehrerer erhaltener chinesischer Schriftzeichen die vorgegebene Schriftzeichenlänge erreicht, Anhalten des Erhaltens, um das oder die mehreren ersten chinesischen Schriftzeichen zu erhalten; und
Durchführen von Erhalten von Schriftzeichen von der Position des Cursors vorwärts und, falls kein chinesisches Textsteuerzeichen erhalten wird, aber die Länge eines oder mehrerer erhaltener chinesischer Schriftzeichen die vorgegebene Schriftzeichenlänge erreicht, Anhalten des Erhaltens, um das oder die mehreren zweiten chinesischen Schriftzeichen zu erhalten, wobei
die vorgegebene Schriftzeichenlänge eine vorgegebene Obergrenze für die Länge des oder der mehreren erhaltenen chinesischen Schriftzeichen ist.

15. Elektronische Vorrichtung nach einem der Ansprüche 12 bis 14, die ferner Folgendes umfasst:
eine passive Einfügeeinheit, die zum Empfangen eines oder mehrerer dritter chinesischer Schriftzeichen, das oder die von dem Benutzer aus der Vorschlagsliste für chinesische Schriftzeichen ausgewählt ist/sind, und zum Anzeigen des oder der mehreren dritten chinesischen Schriftzeichen an der Position des Cursors konfiguriert ist, wobei das oder die mehreren dritten chinesischen Schriftzeichen ein einziges chinesisches Schriftzeichen oder eine chinesische Schriftzeichenkette, die mehrere chinesische Schriftzeichen umfasst, ist/sind.

16. Elektronische Vorrichtung nach einem der Ansprüche 12 bis 15, die ferner Folgendes umfasst:
eine aktive Einfügeeinheit, die zum Anzeigen des oder der mehreren dritten chinesischen Schriftzeichen an der Position des Cursors konfiguriert ist, wenn die Vorschlagsliste für chinesische Schriftzeichen nur einen Vorschlag aus einem oder mehreren dritten chinesischen Schriftzeichen aufweist, wobei das oder die mehreren dritten chinesischen Schriftzeichen ein einziges chinesisches Schriftzeichen oder eine chinesische Schriftzeichenkette, die mehrere chinesische Schriftzeichen umfasst, ist/sind.

17. Elektronische Vorrichtung nach Anspruch 16, wobei die aktive Einfügeeinheit ferner zu Folgendem konfiguriert ist:
Anzeigen eines oder mehrerer dritter chinesischer Schriftzeichen an der Position des Cursors, das oder die als eine erste Möglichkeit dienen, wenn die Vorschlagsliste für chinesische Schriftzeichen mehrere Möglichkeiten aufweist, wobei das oder die mehreren dritten chinesischen Schriftzeichen ein einziges chinesisches Schriftzeichen oder eine chinesische Schriftzeichenkette, die mehrere chinesische Schriftzeichen umfasst, ist/sind.

18. Elektronische Vorrichtung nach einem der Ansprüche 12 bis 17, die ferner Folgendes umfasst:
eine aktive Ersetzeinheit, die zum Löschen des oder der mehreren vierten chinesischen Schriftzeichen konfiguriert ist, wenn ein oder mehrere vierte chinesische Schriftzeichen, das oder die von einem oder mehreren chinesischen Schriftzeichen vor und nach der Position des Cursors gebildet ist/sind, das gleiche Attribut wie das oder die mehreren dritten chinesischen Schriftzeichen aufweist/aufweisen, so dass das oder die mehreren vierten chinesischen Schriftzeichen gelöscht und durch das oder die mehreren dritten chinesischen Schriftzeichen ersetzt werden, wobei
das oder die mehreren vierten chinesischen Schriftzeichen die gleiche Länge wie das oder die mehreren dritten chinesischen Schriftzeichen aufweist/aufweisen und das gleiche Attribut die gleiche Aussprache oder die gleiche Bedeutung umfasst.

19. Elektronische Vorrichtung nach einem der Ansprüche 12 bis 18, wobei die Detektionseinheit speziell zu Folgendem konfiguriert ist:
Detektieren einer Verweildauer des Cursors, nachdem der Cursor aufhört, sich zu bewegen; und Erhalten der Position des Cursors, wenn die Verweildauer des Cursors eine vorgegebene Dauer erreicht; oder
Empfangen einer Cursorpositionserhalteanweisung von dem Benutzer und Ausführen der Cursorpositionserhalteanweisung, um die Position des Cursors zu erhalten.

20. Elektronische Vorrichtung nach einem der Ansprüche 12 bis 18, wobei die Abgleichungseinheit speziell zu Folgendem konfiguriert ist:
Abgleichen des oder der mehreren ersten chinesischen Schriftzeichen und des oder der mehreren zweiten chinesischen Schriftzeichen mit einem chinesischen Schriftzeichen in der Eingabeverfahrensdatenbank und Suchen nach einem chinesischen Schriftzeichen, das ein Wort oder einen Satz mit dem oder den mehreren ersten chinesischen Schriftzeichen und dem oder den mehreren zweiten chinesischen Schriftzeichen bilden kann; oder
Abgleichen des oder der mehreren ersten chinesischen Schriftzeichen oder des oder der mehreren zweiten chinesischen Schriftzeichen mit einem chinesischen Schriftzeichen in der Eingabeverfahrensdatenbank und Suchen nach einem chinesischen Schriftzeichen, das ein Wort oder einen Satz mit dem oder den mehreren ersten chinesischen Schriftzeichen oder dem oder den mehreren zweiten chinesischen Schriftzeichen bilden kann, wobei
das Befragen eines Benutzers nach dem chinesischen Schriftzeichen, das ein Wort oder einen Satz mit dem oder den mehreren ersten chinesischen Schriftzeichen und/oder dem oder den mehreren zweiten chinesischen Schriftzeichen bilden kann, in Form einer Vorschlagsliste für chinesische Schriftzeichen speziell Folgendes umfasst: Befragen des Benutzers nach einer beliebigen Kombination der folgenden drei Arten von chinesischen Schriftzeichen in Form einer Vorschlagsliste für chinesische Schriftzeichen: ein einziges chinesisches Schriftzeichen, das ein Wort oder einen Satz mit dem oder den mehreren ersten chinesischen Schriftzeichen und dem oder den mehreren zweiten chinesischen Schriftzeichen bildet, oder eine chinesische Schriftzeichenkette, die mehrere chinesische Schriftzeichen umfasst und ein Wort oder einen Satz mit dem oder den mehreren ersten chinesischen Schriftzeichen und dem oder den mehreren zweiten chinesischen Schriftzeichen bildet; ein einziges chinesisches Schriftzeichen, das ein Wort oder einen Satz mit dem oder den mehreren ersten chinesischen Schriftzeichen bildet, oder eine chinesische Schriftzeichenkette, die mehrere chinesische Schriftzeichen umfasst und ein Wort oder einen Satz mit dem oder den mehreren ersten chinesischen Schriftzeichen bildet; und ein einziges chinesisches Schriftzeichen, das ein Wort oder einen Satz mit dem oder den mehreren zweiten chinesischen Schriftzeichen bildet, oder eine chinesische Schriftzeichenkette, die mehrere chinesische Schriftzeichen umfasst und ein Wort oder einen Satz mit dem oder den mehreren zweiten chinesischen Schriftzeichen bildet.

21. Elektronische Vorrichtung nach einem der Ansprüche 12 bis 18, wobei die Befrageeinheit speziell zu Folgendem konfiguriert ist:
Sequenzieren von chinesischen Schriftzeichen in der Vorschlagsliste für chinesische Schriftzeichen der Reihe nach gemäß einem Abgleichungsgrad mit dem oder den mehreren ersten chinesischen Schriftzeichen und/oder dem oder den mehreren zweiten chinesischen Schriftzeichen und Befragen des Benutzers nach den sequenzierten chinesischen Schriftzeichen

## Revendications

1. Procédé d'invite à la saisie d'un ou de plusieurs caractères chinois comprenant :
la récupération d'une position d'un curseur (S101),
la récupération d'un ou de plusieurs premiers caractères chinois avant la position du curseur et contigus au curseur, ainsi que d'un ou de plusieurs deuxièmes caractères chinois après la position du curseur et contigus au curseur, le ou les premiers caractères chinois étant un caractère chinois unique ou une chaîne de caractères comprenant de multiples caractères chinois, et le ou les deuxièmes caractères étant un caractère unique ou une chaîne de caractères comprenant de multiples caractères (S 102),
la récupération, à partir d'une base de données de méthodes de saisie, d'un ou de plusieurs caractères chinois qui peuvent former un mot ou une phrase avec le ou les premiers caractères chinois et le ou les deuxièmes caractères chinois (S103), et
l'invite, sous la forme d'une liste de caractères candidats, faite à un utilisateur concernant le ou les caractères chinois qui peuvent former un mot ou une phrase avec le ou les premiers caractères chinois et le ou les deuxièmes caractères chinois (S 104).

2. Procédé d'invite à la saisie d'un ou de plusieurs caractères chinois selon la revendication 1, dans lequel la récupération du ou des premiers caractères chinois avant la position du curseur et contigus au curseur et du ou des deuxièmes caractères chinois après la position du curseur et contigus au curseur comprend :
l'exécution de la récupération du ou des caractères vers l'arrière à partir de la position du curseur vers un caractère de contrôle de texte pour récupérer le ou les premiers caractères chinois, et
l'exécution de la récupération du ou des caractères vers l'avant à partir de la position du curseur vers un caractère de contrôle de texte pour récupérer le ou les deuxièmes caractères chinois, dans lequel
le caractère de contrôle de texte comprend : une marque de ponctuation, un retour chariot et un renvoi à la ligne.

3. Procédé d'invite à la saisie d'un ou de plusieurs caractères chinois selon la revendication 1, dans lequel la récupération du ou des premiers caractères chinois avant la position du curseur et contigus au curseur et du ou des deuxièmes caractères chinois après la position du curseur et contigus au curseur comprend :
l'exécution de la récupération du ou des caractères vers l'arrière à partir de la position du curseur et, si aucun caractère de contrôle de texte n'est obtenu mais que la longueur d'un ou de plusieurs caractères chinois obtenus atteint une longueur préréglée de caractères, l'arrêt de la récupération pour récupérer le ou les premiers caractères chinois, et
l'exécution de la récupération du ou des caractères vers l'avant à partir de la position du curseur et, si aucun caractère de contrôle de texte n'est obtenu mais que la longueur d'un ou de plusieurs caractères chinois obtenus atteint la longueur préréglée de caractères, l'arrêt de la récupération pour récupérer le ou les deuxièmes caractères chinois, dans lequel
la longueur préréglée des caractères est une limite supérieure préréglée du ou des caractères chinois obtenus.

4. Procédé d'invite à la saisie d'un ou de plusieurs caractères chinois selon l'une quelconque des revendications 1 à 3, comprenant en outre :
la réception d'un ou de plusieurs troisièmes caractères chinois sélectionnés par l'utilisateur dans la liste de caractères candidats et l'affichage du ou des troisièmes caractères chinois à la position du curseur, le ou les troisièmes caractères chinois étant un caractère unique ou une chaîne de caractères comprenant de multiples caractères.

5. Procédé d'invite à la saisie d'un ou de plusieurs caractères chinois selon l'une quelconque des revendications 1 à 3, comprenant en outre :
lorsque la liste de caractères candidats comporte seulement un ou des troisièmes caractères chinois candidats, l'affichage à la position du curseur du ou des troisièmes caractères chinois, le ou les troisièmes caractères chinois étant un caractère unique ou une chaîne de caractères comprenant de multiples caractères.

6. Procédé d'invite à la saisie d'un ou de plusieurs caractères chinois selon l'une quelconque des revendications 1 à 3, comprenant en outre :
lorsque la liste de caractères candidats présente des options multiples, l'affichage d'un ou de plusieurs troisièmes caractères chinois, lesquels servent de première option à la position du curseur, le ou les troisièmes caractères chinois étant un caractère unique ou une chaîne de caractères comprenant de multiples caractères.

7. Procédé d'invite à la saisie d'un ou de plusieurs caractères chinois selon l'une quelconque des revendications 4 à 6, dans lequel, avant l'affichage du ou des troisièmes caractères chinois à la position du curseur, le procédé comprend en outre : lorsqu'un ou des quatrièmes caractères chinois, formés par un ou des caractères avant et après la position du curseur, présentent le même attribut que celui du ou des troisièmes caractères chinois, la suppression du ou des quatrièmes caractères chinois de sorte à supprimer et remplacer le ou les quatrièmes caractères chinois par le ou les troisièmes caractères chinois, dans lequel
le ou les quatrièmes caractères chinois présentent la même longueur que celle du ou des troisièmes caractères chinois, et le même attribut comprend la même prononciation ou la même signification.

8. Procédé d'invite à la saisie d'un ou de plusieurs caractères chinois selon l'une quelconque des revendications 1 à 7, dans lequel la récupération de la position du curseur comprend en particulier :
la détection, après que le curseur a arrêté de se déplacer, de la durée de rétention du curseur, et lorsque la durée de rétention du curseur atteint une durée préréglée, la récupération de la position du curseur, ou
la réception d'une instruction de récupération de position du curseur provenant de l'utilisateur et l'exécution de l'instruction de récupération de la position du curseur pour récupérer la position du curseur.

9. Procédé d'invite à la saisie d'un ou de plusieurs caractères chinois selon l'une quelconque des revendications 1 à 7, dans lequel
la récupération, à partir de la base de données des méthodes de saisie, du ou des caractères qui peuvent former un mot ou une phrase avec le ou les premiers caractères chinois et le ou les deuxièmes caractères chinois comprend :
la mise en correspondance du ou des premiers caractères chinois et du ou des deuxièmes caractères chinois avec un ou des caractères dans la base de données des méthodes de saisie, et la recherche d'un ou de plusieurs caractères qui peuvent former un mot ou une phrase avec le ou les premiers caractères chinois et le ou les deuxièmes caractères chinois,
dans lequel
l'invite, sous la forme d'une liste de caractères candidats, faite à un utilisateur concernant le ou les caractères qui peuvent former un mot ou une phrase avec le ou les premiers caractères chinois et le ou les deuxièmes caractères chinois comprend en particulier : l'invite, sous la forme d'une liste de caractères candidats, faite à l'utilisateur concernant toute combinaison des trois types suivants de caractère ou de caractères : un caractère unique qui forme un mot ou une phrase avec le ou les premiers caractères chinois et avec le ou les deuxièmes caractères chinois, ou bien une chaîne de caractères qui comprend de multiples caractères et forme un mot ou une phrase avec le ou les premiers caractères chinois et avec le ou les deuxièmes caractères chinois ; un caractère unique qui forme un mot ou une phrase avec le ou les premiers caractères chinois, ou bien une chaîne de caractères qui comprend de multiples caractères et forme un mot ou une phrase avec le ou les premiers caractères chinois ; ainsi qu'un caractère unique qui forme un mot ou une phrase avec le ou les deuxièmes caractères chinois, ou bien une chaîne de caractères qui comprend de multiples caractères et forme un mot ou une phrase avec le ou les deuxièmes caractères chinois.

10. Procédé d'invite à la saisie d'un ou de plusieurs caractères chinois selon la revendication 9, dans lequel l'invite, sous la forme d'une liste de caractères candidats, faite à un utilisateur concernant le ou les caractères qui peuvent former un mot ou une phrase avec le ou les premiers caractères chinois et le ou les deuxièmes caractères chinois comprend en particulier :
le séquencement un par un des caractères dans la liste de caractères candidats en fonction d'un degré de correspondance avec le ou les premiers caractères chinois et/ou le ou les deuxièmes caractères chinois, et l'invite faite à l'utilisateur concernant les caractères séquencés.

11. Procédé d'invite à la saisie d'un ou de plusieurs caractères chinois selon l'une quelconque des revendications 1 à 10, dans lequel la base de données des méthodes de saisie comprend : une bibliothèque de caractères, une bibliothèque de mots et une bibliothèque de phrases.

12. Dispositif électronique (1) comprenant :
une unité de détection (11) configurée pour récupérer une position d'un curseur,
une unité de récupération (12) configurée pour récupérer un ou plusieurs premiers caractères chinois avant la position du curseur et contigus au curseur et un ou plusieurs deuxièmes caractères chinois après la position du curseur et contigus au curseur, le ou les premiers caractères chinois étant un caractère chinois unique ou une chaîne de caractères chinois comprenant de multiples caractères chinois, et le ou les deuxièmes caractères chinois étant un caractère chinois unique ou une chaîne de caractères chinois comprenant de multiples caractères chinois,
une unité de correspondance (13) configurée pour récupérer, à partir d'une base de données des méthodes de saisie, un ou plusieurs caractères chinois qui peuvent former un mot ou une phrase avec au moins l'un parmi : le ou les premiers caractères chinois et le ou les deuxièmes caractères chinois, et
une unité d'invite (14) configurée pour inviter, sous la forme d'une liste de caractères chinois candidats, un utilisateur concernant le caractère chinois qui peut former un mot ou une phrase avec moins l'un parmi : le ou les premiers caractères chinois et le ou les deuxièmes caractères chinois.

13. Dispositif électronique selon la revendication 12, dans lequel l'unité de récupération est en particulier configurée pour :
effectuer une récupération de caractères vers l'arrière à partir de la position du curseur jusqu'à un caractère chinois de contrôle de texte pour récupérer le ou les premiers caractères chinois, et
effectuer une récupération de caractères vers l'avant à partir de la position du curseur jusqu'à un caractère chinois de contrôle de texte pour récupérer le ou les deuxièmes caractères chinois, dans lequel
le caractère chinois de contrôle de texte comprend : une marque de ponctuation, un retour chariot et un saut à la ligne.

14. Dispositif électronique selon la revendication 12, dans lequel l'unité de récupération est en particulier configurée pour :
effectuer une récupération de caractères vers l'arrière à partir de la position du curseur et, si aucun caractère chinois de contrôle de texte n'est obtenu mais que la longueur d'un ou de plusieurs caractères chinois obtenus atteint une longueur préréglée de caractères, arrêter la récupération pour récupérer le ou les premiers caractères chinois, et
effectuer une récupération de caractères vers l'avant à partir de la position du curseur et, si aucun caractère chinois de contrôle de texte n'est obtenu mais que la longueur d'un ou de plusieurs caractères chinois obtenus atteint la longueur préréglée de caractères, arrêter la récupération pour récupérer le ou les deuxièmes caractères chinois, dans lequel
la longueur préréglée de caractères est une limite supérieure préréglée pour la longueur du ou des caractères chinois obtenus.

15. Dispositif électronique selon l'une quelconque des revendications 12 à 14, comprenant en outre :
une unité d'insertion passive configurée pour recevoir un ou des troisièmes caractères chinois sélectionnés par l'utilisateur dans la liste de caractères chinois candidats et afficher le ou les troisièmes caractères chinois à la position du curseur, le ou les troisièmes caractères chinois étant un caractère chinois unique ou une chaîne de caractères chinois comprenant de multiples caractères chinois.

16. Dispositif électronique selon l'une quelconque des revendications 12 à 15, comprenant en outre :
une unité d'insertion active configurée, lorsque la liste de caractères chinois candidats comporte seulement un ou des troisièmes caractères chinois candidats, pour afficher le ou les troisièmes caractères chinois à la position du curseur, le ou les troisièmes caractères chinois étant un caractère chinois unique ou une chaîne de caractères chinois comprenant de multiples caractères chinois.

17. Dispositif électronique selon la revendication 16, dans lequel l'unité d'insertion active est en outre configurée pour :
lorsque la liste de caractères chinois candidats présente de multiples options, afficher un ou des troisièmes caractères chinois qui servent de première option à la position du curseur, le ou les troisièmes caractères chinois étant un caractère chinois unique ou une chaîne de caractères chinois comprenant de multiples caractères chinois.

18. Dispositif électronique selon l'une quelconque des revendications 12 à 17, comprenant en outre :
une unité de remplacement active configurée pour supprimer le ou les quatrièmes caractères chinois, lorsqu'un ou des quatrièmes caractères chinois formés par un ou des caractères chinois avant et après la position du curseur présentent le même attribut que celui du ou des troisièmes caractères chinois, de sorte à supprimer et remplacer le ou les quatrièmes caractères chinois par le ou les troisièmes caractères chinois, dans lequel
le ou les quatrièmes caractères chinois présentent la même longueur que celle du ou des troisièmes caractères chinois, et le même attribut comprend la même prononciation ou la même signification.

19. Dispositif électronique selon l'une quelconque des revendications 12 à 18, dans lequel l'unité de détection est en particulier configurée pour :
détecter la durée de rétention du curseur, après que le curseur a arrêté de se déplacer, et lorsque la durée de rétention du curseur atteint une durée préréglée, récupérer la position du curseur, ou
recevoir une instruction de récupération de position du curseur provenant de l'utilisateur et exécuter l'instruction de récupération de position du curseur pour récupérer la position du curseur.

20. Dispositif électronique selon l'une quelconque des revendications 12 à 18, dans lequel l'unité de correspondance est en particulier configurée pour :
faire correspondre le ou les premiers caractères chinois et le ou les deuxièmes caractères chinois avec un caractère chinois dans la base de données des méthodes de saisie, et rechercher un caractère chinois qui peut former un mot ou une phrase avec le ou les premiers caractères chinois et le ou les deuxièmes caractères chinois, ou faire correspondre le ou les premiers caractères chinois ou le ou les deuxièmes caractères chinois avec un caractère chinois dans la base de données des méthodes de saisie et rechercher un caractère chinois qui peut former un mot ou une phrase avec le ou les premiers caractères chinois ou le ou les deuxièmes caractères chinois, dans lequel
l'invite, sous la forme d'une liste de caractères chinois candidats, faite à un utilisateur concernant le caractère chinois qui peut former un mot ou une phrase avec au moins l'un parmi : le ou les premiers caractères chinois et le ou les deuxièmes caractères chinois, comprend en particulier : l'invite, sous la forme d'une liste de caractères chinois candidats, faite à l'utilisateur pour toute combinaison parmi les trois types suivants de caractères chinois : un caractère chinois unique qui forme un mot ou une phrase avec le ou les premiers caractères chinois et avec le ou les deuxièmes caractères chinois, ou bien une chaîne de caractères chinois qui comprend de multiples caractères chinois et forme un mot ou une phrase avec le ou les premiers caractères chinois et avec le ou les deuxièmes caractères chinois ; un caractère chinois unique qui forme un mot ou une phrase avec le ou les premiers caractères chinois, ou bien une chaîne de caractères chinois qui comprend de multiples caractères chinois et forme un mot ou une phrase avec le ou les premiers caractères chinois ; ainsi qu'un caractère chinois unique qui forme un mot ou une phrase avec le ou les deuxièmes caractères chinois, ou bien une chaîne de caractères chinois qui comprend de multiples caractères chinois et forme un mot ou une phrase avec le ou les deuxièmes caractères chinois.

21. Dispositif électronique selon l'une quelconque des revendications 12 à 18, dans lequel l'unité d'invite est en particulier configurée pour :
séquencer un par un des caractères chinois dans la liste de caractères chinois candidats en fonction d'un degré de correspondance avec le ou les premiers caractères chinois et/ou le ou les deuxièmes caractères chinois, et inviter l'utilisateur concernant les caractères chinois séquencés.
